# EUROPEAN PATENT APPLICATION

(11) **EP 2 261 818 A1**
(43) Date of publication of application: **15.12.2010**
(21) Application number: 09007633.2
(22) Date of filing: 09.06.2009
(51) Int. Cl.: G06F 17/28

(54) **A method for inter-lingual electronic communication**

(71) Applicant: Dudu Communications FZ-LLC, Dubai (AE)
(72) Inventor: Deniz, Burhan, Istanbul (TR); Issaev, Alibek, Istanbul (TR); Yazici, Emre, Istanbul (TR); Erdem, Caglayan, 86156 Augsburg (DE)
(74) Representative: Müller - Hoffmann & Partner

(57) **Abstract**

A method for inter-lingual electronic communication, comprising: providing a database which comprises first template phrases of a first language associated with second template phrases of a second language, wherein a respective second template phrase is a translation of a respective first template phrase the respective second template phrase is associated with, the translation having been verified by a translator; receiving an input at a first device; determining a first target phrase by comparing the input to at least a part of the first template phrases in the database, the first target phrase corresponding to a certain first template phrase of the database at least partly matching or being related to the input; determining a second target phrase being a translation of the first target phrase, the second target phrase corresponding to a certain second template phrase associated with the certain first template phrase in the database; and outputting the second target phrase at a second device.

## Description

An embodiment of the invention relates to a method for inter-lingual electronic communication. Further embodiments of the invention relate to a system, a server, and a device for inter-lingual electronic communication.

### BACKGROUND

With the advancing globalization and the growing international mobility, e.g. in business, emigration and education, the world is connected closer than ever. For example, one of four people of the world population has access nowadays to the internet, and one of two people owns a mobile phone.

However, about 94 percent of the world population cannot speak another language than their native tongue. As a consequence, a growing need for removing language barriers and supporting cross-cultural communication is experienced.

### BRIEF SUMMARY

It is therefore an object of the invention to provide a better support for cross-cultural communication.

This object is solved by a method, a system, a server, and a device for inter-lingual electronic communication according to the independent claims.

In an embodiment of a method for inter-lingual electronic communication, a database is provided. The database may be considered as a dictionary for supporting, e.g. translating electronic communication from first language into a second language. To achieve this, the data base may include first template phrases of the first language associated with second template phrases of the second language.

The first and second languages may be natural languages, for example spoken languages like English, Russian, Turkish, Japanese, or Spanish. Further, the first and second languages may also include or correspond to certain idioms, such as a language, dialect, or style of speaking peculiar to a people or group of persons, the idiom having a peculiar character or genius of a language. For example, expressions of a slang language may be included.

The first template phrases may be formed by sequences of words. The first template may also just be one word. The sequence of words may also form a phrase, e.g. a sequence of two or more words arranged in a grammatical construction and acting as a unit in a sentence, a clause constituting a syntactic construction forming a part of a sentence or constituting a whole sentence, or by one or more sentences. Also, brief exclamations like "Hi you!" or locutions, such as particular forms of expressions or idioms, may be included. Further, for supporting a natural way of communicating, expressions of daily life may be included.

Further, the first and second template phrases may include placeholders, such as wildcards or wildcard characters. Placeholders may be provided in a phrase for being replaced by words, such as, for example, names of persons, and may therefore generalize the phrase. Further, the placeholders may be determined such that they identify a category of words or a category of phrases that may replace the placeholder, such as an identifier identifying a person, a quantity, a currency, or the like. For example, the identifier <PERSON> may be replaced by a word identifying a person, such as "you", "uncle", "the Administrator", or the like. An identifier <PET> may be replaced by "cat", "dog", "canary", or the like. Consequently, a template phrase like "How old is <PERSON>?" may be used for translating "How old is your sister?" and "How old is your husband?". Thus, an efficient organization of the database including first and second template phrases may be achieved, since a single template phrase may be adapted by replacing the placeholders in a variety of ways, thereby forming various instances of the template phrases that will be considered as target phrases in the following.

The database may be used as a dictionary, wherein a respective second template phrase may be a translation to the second language of a respective first template phrase in the first language, the respective second template phrase being associated with the respective first template phrase. For example, the database may include pairs of translated words, phrases, or sentences.

Further relations between template phrases, such as one-to-many or many-to-many, may be realized in the database. For example, if a certain first template phrase may be translated in several different ways, the certain first template phrase may be stored in the database in relation to a plurality of second template phrases. For example, the German greeting "Hallo" may be translated to an informal "Hi" or to a more formal "Hello" in English. The German "Hallo" as a first template phrase may therefore be stored in association with the second template phrases "Hi" and "Hello". The association may, for example, be realized by using lists, pointers, tables, a relational database and/or a distributed relational database. If a user of the first device has e.g. limited knowledge of the second language (see below), the different translations may be selectable by the user and the user may have an influence on the translation. This may further enhance user satisfaction. Also, the user may be allowed to correct translation errors by selecting a translation of his input and marking it as erroneous. Before canceling the translation from the database this might be verified by other users and/or by registered translators doing the maintenance of the database.

The database may also relate, e.g. associate, template phrases of more than two languages, e.g. relating all translations to languages supported by the embodiment of the method in an efficient way. For example, the database may comprise third template phrases of a third language, a respective third template phrase being a translation of a respective first template phrase the respective third template phrase is associated with.

The translations included in the database may have been verified by a translator, e.g. by a human acquainted with the first and second language, having a certain knowledge of both languages. Also the translations to the third language may have been verified by a further translator.

For example, the translators may be professional translators, e.g. working for a provider of the database. Further, the translators may also be persons from a social community of users, e.g. a user having a high credibility and deep knowledge of the first and second languages. Further, the translators may also be normal users from the community.

The social community may be formed of users that intend to help each other by mutually supporting their conversations and translations. Further, professional translators and moderators may support the social community.

The credibility of a respective translator may be ranked, e.g. based on a rating of his former translations. The ranking of the credibility of the respective translator may for example be used as a basis for deciding whether a translation may be included in the database. The credibility of the translators may also be used to mark a credibility of a provided translation, and may be stored in the database with the translation, i.e. with the first and second template phrases associated with each other.

Setting high thresholds for credibility, e.g. for accepting a translator or for including a translation into the database, may help to ensure the use of professional or credible translators, and may further help to ensure that the translations have a predetermined, e.g. high, quality. Further, using translations provided by or approved by humans allows establishing a database including natural translations of phrases, i.e. first and second template phrases forming part of the natural language as spoken by native speakers, thereby allowing automatically supporting the provision of natural translations.

However, it may also be possible to include translations that have been verified in a different way, e.g. that have been imported from a further dictionary, the dictionary fulfilling for example predetermined high-quality demands. For example, it may be possible to include the contents of a well-known, approved dictionary as a starting point for building up the database.

Further, it is possible that the translators may be supported by automatic translation systems or translation software providing machine translations, such as Google Translate®, Yahoo Babel Fish® or the like. However, it may be assured that before being included into the database, a translation is to be verified by a human. Consequently, high quality demands for natural translations may be fulfilled.

To achieve a high quality of translation, a first proposal of a translation, including for example a first template phrase associated with a second template phrase and/or a first target phrase associated with a second target phrase, suggested by a first translator or provided by an automatic translation system, may be forwarded, e.g. transmitted, to a certain number of e.g. 20 further translators and/or further users of the community for an approval or a correction. Based on the result of approval or correction of the further translators or users, voting strategies for determining a potentially best-matching translation may be applied. Further, the translations may be ranked in accordance with the approvals or corrections received before being included into the database. Additionally, the credibility of a translator may be analyzed when comparing his result to the results of the other translators. All these measures may be performed automatically and may allow achieving a high quality of the database and an establishment of an efficient community for automatically supported high quality translations.

During the translation of the first target phrase, the user may be informed about the state of the translation. For example, the user may get an indication such as "translation in progress", "translation under verification", and/or "translation completed". The state of translation may for example be defined by a finite state machine, as will be discussed below.

Further, a predetermined time may be defined within which the user receives a translation of the first target phrase. For example, the predetermined time may be set to one minute. For guaranteeing a fast translation, the first target phrase may for example be forwarded to a plurality of translators, or to a professional translator who is ranked by the speed of translation.

For facilitating the verification of the translations and for guaranteeing a high quality of the translations and/or the content of the database, a filtering by a kind of spam filter may be applied. For example, if a user entered several words, but none of them was found in the database, this could indicate whether the words are meaningful or just randomly typed characters by the user. Further, if there is a big difference in length between the input and its translation, there may be a need for further checking. Additionally, if an input or its translation includes words which are not permitted, e.g. violating a code of conduct, the translation may not be included in the database. Further, it may be determined if a wrong language has been used for translation. The filtering may be performed automatically and may indicate the need for further human approval or correction.

Within an embodiment of the method, an input may be received at a first device. The input may, for example, be entered by a user of the first device via a user interface. For example, the input may be provided in a written form, e.g. as a sequence of characters entered via a keyboard, a touchpad or the like. Alternatively, the input may be given by audio data entered, for example, by an utterance of the user via microphone. In this case, the input may be preprocessed, e.g. by a speech recognition system, for being transformed in a format which is suitable for further processing, e.g. a character string.

Based on the input, a first target phrase may be determined. For this, the input may be compared to at least a part of the first template phrases in the database.

Before comparing, the input may further be preprocessed. The preprocessing may include, for example, a lexical analysis, identifying words or types of words, a syntactical analysis verifying the use of grammatical constructions, and/or a semantic analysis, determining a semantic content of the input.

For example, if the input is given as a sequence of characters, the first language may be determined based on the sequence. Further, corrections of typing errors or grammatical errors may be proposed. Additionally, the input may be preprocessed by suppressing certain types of words, replacing them by a wildcard, a placeholder, or a synonym. For example, as described in the above, names of persons may be suppressed or may be replaced by placeholders. Additionally, certain words may be replaced by placeholders representing a category of the respective word e.g. "cat" or "dog" may be replaced by "pet" or "animal". Further, conjunctions connecting parts of a sentence, such as "and" or "or", and interjections, such as "Oh" or "Hey", may be replaced (interjection clearance). Alternatively or in addition, further steps of preprocessing, as performed for query expansion expanding queries for databases, may be carried out.

The preprocessed input, or alternatively the input without any preprocessing, may be used for determining the first target phrase. The first target phrase may, for example, be determined such that is corresponds to a certain first template phrase of the database. For example, characterizing parts, e.g. parts without wildcards or placeholders, of the first target phrase may correspond to characterizing parts, e.g. parts without names, of the first template phrase. Thereby, a certain first template phrase may be identified in the database which at least partly matches the input or is related to the input.

For determining whether the certain first template phrase matches the input, all kinds of algorithms of pattern matching, e.g. matching of character strings, phrases or sentences, may be applied. Further, all kinds of relations between the input and the certain first template phrase may be explored for determining if the input is related to the certain first template phrase.

The certain first template phrase may then be used as a basis for determining the first target phrase. For example, placeholders included in the certain first template phrase may be replaced by words or names included in the input. E.g. all instances of "pet" in the certain first template phrase may be replaced by "cat" or "dog" in accordance with the input, and all instances of placeholders for names may be replaced by names included in the input. For example, the first template phrase "Give my regards to <NAME>" may be used as the basis for determining the first target phrase "Give my regards to Sandra".

After a suggestion of the first target phrase has been provided, the user of the first device may have the opportunity of correcting the suggestion. For example, the user may select a part of the suggestion and may amend the selected part, thereby amending the first target phrase. For example, a cursor may be positioned such that words replacing the placeholders or names may easily be amended by the first user. For positioning the cursor, special buttons may be provided on a keypad or in a graphical user interface.

Based on the first target phrase, a second target phrase may be determined, the second target phrase being a translation of the first target phrase. For example, the second target phrase may correspond to a certain second template phrase which is associated with the certain first template phrase in the database.

For determining the second target phrase, all replacements of placeholders, wildcards, or the like in the second template phrase may be carried out in manner analog to the replacements in the first target phrase. Thereby, the second target phrase is determined as an instance of the second template phrase, which second template phrase is an approved translation of the first template phrase corresponding to the first target phrase. Correspondingly, it may be assumed that the second target phrase translates the first target phrase in a natural manner. Therefore, a high quality and natural translation of the first target phrase may be achieved.

Once determined, the second target phrase may be output at a second device. Since the first and second device may be remotely located, e.g. in different countries or even on different continents, the displaying at the second device may include sending the second target phrase to the second device, e.g. over a network, such as the internet or a telecommunications network.

Further, corresponding to a determination of the second target phrase, also a third target phrase being a translation of the first target phrase to the third language may be determined and output at a third device. The third target phrase may correspond to a certain third template phrase associated with the certain first template phrase in the database. Sending the third target phrase to a user of a third device allows establishing a communication between more than two users, e.g. a user conference.

In an embodiment of the method, the first target phrase may be determined by providing set of target phrases matching the input. For example, when entering the input, the set of target phrases matching the characters entered may be determined and displayed to the user of the first device. The set of target phrases may be determined, e.g. automatically determined, by analyzing the first template phrases in the database, e.g. by comparing the first template phrases to the input, as already described in detail in the above. Further, in each target phrase included in the set of target phrases, placeholders or wildcards may be replaced in accordance with the input, as already described in the above.

The moment of providing the set of target phrases may be determined such that a certain quality of the result may be expected. It may depend on a number of characters or words in the input. For example, a first set of target phrases may be provided after the user has entered seven characters or three words.

Further, if the user continues typing providing further input, the set of target phrases may be adapted in accordance with the further input.

The number of target phrases within the set may be predetermined e.g. by a user setting or by a global setting of an administrator. Alternatively, the number of target phrases may not be limited, and all target phrases available from the database matching the input may be displayed.

It may be useful to sort the target phrases, e.g. in accordance with a quality of match with the input and/or with an indicator indicating a relevance or a respective ranking. For determining the ranking, statistics, neural networks and genetic algorithms may be used to achieve a high quality of suggestion. Many further facts may be considered for determining the ranking, such as for example the type of conversation, an age or cultural background of the user, or the behavior of the person the user is communicating with. These further facts will be described in more detail below.

For determining the first target phrase based on the set of target phrases, a selection of the user of the first device may be received and analyzed, the selection indicating the first target phrase selected from the set of target phrases by the user.

The selection may be supported by the user interface, e.g. by displaying the set of phrases as a drop down list underneath an input line, the entries of the drop down list being selectable, e.g. by marking and confirming the selection via an input device like a keyboard or a pointing device such as a mouse. If no graphic user interface is provided, a set of target phrases may also be rendered acoustically to the user, who may give an acoustical feedback.

The suggestion of target phrases may help to prevent spelling errors and grammatically wrong sentence building. These errors could otherwise pose a problem to translation, since incorrect sentences should not be included in the database.

In an embodiment of the method, the first target phrase, the second target phrase and/or the set of target phrases presented for selection of the first target phrase may be determined by analyzing a semantic context of the input. The semantic context may e.g. be a meaning pertaining to the characters, words, phrases, or sentences used within the input.

The context of the input may be determined by analyzing the input itself or by analyzing phrases preceding the input, which phrases may have an influence on the meaning of the input. Further, the circumstances or facts surrounding the event of communication/conversation or the situation may be taken into consideration when determining the semantic context.

The semantic context may for example arise from or determine a topic of the input, e.g. a topic of the conversation. The topic may be a subject of the conversation or a discussion, a theme, or a general field of considerations present in the communication.

For example, the semantic context or topic of the communication may depend on a personal relation between the user of the first device and the user of the second device, such as friendship, love, or the like, a shared interest such as an interest in an artist, a common personal project such as a planned holiday or the buying of a new car, or a shared work project. For example, if the subject of communication is a love attachment, the set of target phrases will be different than if the subject matter is common work project.

In a further embodiment of the method, the semantic context may be determined automatically. For example, a context-identifying dictionary may be used, in which words, phrases, or sentences may be annotated with an identifier identifying the semantic context. For example, words occurring in the input may be analyzed by means of the context-identifying dictionary, whereby the context may be identified. Further, a weighting of the words may be used to determine an overall context, e.g. by weighting the context of the words occurring the input.

In a further embodiment of the method, the semantic context may also be determined manually. For example, the conversation may be monitored by a moderator, e.g. a human following the conversation for providing further support for translation. In this case, the moderator monitoring the communication may manually determine the semantic context, e.g. may set it to "love attachment" or "professional project". Further, the semantic context may also be set by the user of the first device, e.g. by entering the semantic context directly or by selecting the semantic context from a set of possible semantic contexts.

Further, the semantic context may also be determined by analyzing preceding phrases of the communication, e.g. a preceding first or second target phrase of the user of the first device or of the user of the second device. For example, if a question has been posed by the user of the second device to the user of the first device, it may be assumed that the current input of the user of the first device will be an answer, and that the answer will further be related to the same topic or semantic context.

Further, a preceding semantic context of an earlier communication session between the users of the first and second device may be analyzed. For example, if it is known that the users work together in a banking project, the semantic context may be set accordingly.

Further, the semantic context may also be determined by analyzing a mood of the user of the first device. This may, for example, be achieved by analyzing the content of preceding phrases or messages, such as "I am angry about ..." or "I have never been so deeply in love before". The mood of the user of the first device may also be determined by analyzing acoustical features of his voice input indicating if he is angry, sad, or happy. Further, emoticons (such as the smiley face) used during the conversation may also be used for determining the mood.

Alternatively or in addition, the semantic context may be determined by analyzing a user profile describing personal preferences of the user of the first device. For example, the user's personal tastes or topics may be stored in the user profile and may be used for ranking the set of target phrases proposed to the user of the first device for selecting the first target phrase.

In a further embodiment of the method, a content may be rendered at the first and/or second device depending on and/or corresponding to the semantic context. The content may for example be a commercial advertizing, a multimedia item, and/or a link to an executable application e.g. downloadable via a network. For example, if the semantic context is the buying of a new car, advertisings of car sellers, banking offers to award a lone, and/or calculation programs for calculating monthly rates for affording the loan may be displayed at the first and/or second device. Further, background music may rendered acoustically in accordance with the semantic context, e.g. romantic music accompanying a romantic conversation in accordance with the mood and/or profiles of the users.

In a further embodiment of the method, further first template phrases associated with second template phrases may be included in the database. For example, if no certain first template phrase matching the input is found in the database, the second target phrase may be determined e.g. by a direct translation of the input. In this case, a further first template phrase may be determined based on the input, and a further second template phrase may be determined based on the translation of the input. The first and second template phrases may be included in the database and associated with each other. Thereby, the number of translations included in the database may be growing by the time, such that most common sentences of daily life may be included in the database after a certain period. This will allow a high rate of automatic translations based on the template phrases included in the database.

In a further embodiment of the method, the input, the second target phrase, the further first template phrase and/or the further second template phrase may be approved by a human. This, on the one hand, it may help to assure that the inter-lingual electronic communication between the user of the first device and the user of the second device is supported with a high quality, guaranteeing natural translations. On the other hand, this may help to achieve a high quality of the translations included in the database, e.g. of the determination and association of the first and second template phrases. Further, also an efficient organization of the database may be supported by the human, guaranteeing that all words with a rather specific meaning, such as names, may be exchanged by placeholders or wildcard characters. Consequently, a high quality and efficient organization of the content of the database may be assured, allowing a widespread applicability and a high quality of the automatic translations.

In a further embodiment of the method, a style of communication may be determined. This style of communication may indicate, for example, if a more formal language is used, or if a spoken language, such as slang, is used.

The style of communication may be determined by analyzing at least one of a group including the input, a preceding first and second target phrase of the user of the first device, a preceding first and second target phrase of the user of a second device, a semantic context of the input, a user profile of the user of the first device, an age of the user of the first device, a user profile of a user of the second device, and an age of the user of the second device. For example, if the subject of conversation is a common work project, the language will be more formal than in a conversation between lovers. Further, if a German grandchild is communicating with his Persian grandmother, the age of the grandmother may be the determining factor for the style of conversation and the wording selected.

In the embodiment, the first target phrase, the second target phrase and/or the set of target phrases may be determined depending on the style of communication. For example, in a work project, the English "Hello" may be translated to "Guten Tag", while in a conversation between friends, it may be translated to the more informal "Hallo".

The determination of the first target phrase, the second target or the set of target phrases may be supported by analyzing identifiers descriptive of the style of communication, which identifiers may be included in the database. For example, the German "Guten Tag" may be identified as being suitable for formal conversation, while the German "Hallo" may be annotated as being more informal. The identifiers, e.g. realized by tags, may be stored in the database in relation with the first and/or second template phrases, thereby supporting efficient selection of the phrases depending on the style of communication.

Further tags and/or identifiers may be included in the database, identifying a respective semantic context, mood, type or sentence category of a first or second template phrase. The tags may be used for retrieving a template phase corresponding to a semantic context, mood, type or sentence category present in an ongoing conversation, or may be used for determining the semantic context, mood, type or sentence category based on the target phrases of the ongoing conversation. For example, a topic of the ongoing conversation may be determined based on a histogram of keywords present in the conversation, the keywords being tagged as related to a context. If, for example, the words BMW®, car, motorsport and Chrysler® have been used, the topic may be set to cars or motorsport. The topic determined may further be saved as a topic of interest within the users' profiles.

In a further embodiment of the method, the input may be a speech utterance of the user of the first device. Further, the second target phrase may be output as an audio output at the second device. The audio output may be determined by a text-to-speech conversion performed automatically, e.g. at the second device, a central server, or the first device, and/or may be determined based on pre-recorded audio data, which audio data may for example be stored in the database e.g. in relation with the second template phrases.

With the embodiment, inter-lingual communication via telephone or mobile phone or during video and/or audio conferences may be supported, allowing automatic simultaneous translations with a high quality and natural impression. Further, the embodiment facilitates inter-lingual conversation performed by use of a mobile device having reduced input facilities, but allowing speech recognition and rendering.

A system for inter-lingual electronic communication includes a database as described in the above. The database may include first template phrases of a first language associated with second template phrases of a second language. As described in the above, a respective second template phrase may be a translation of a respective first template phrase the respective second template phrase is associated with. The translation may have been verified by a translator, as described in the above.

The system may further include a first device having means for receiving an input, e.g. an input of the first user. The means for receiving the input may for example be a means for entering character strings, such as a keyboard, a writing pad or a pointing device. Alternatively or in addition, the means for receiving an input may also be adapted for receiving and processing an acoustic input such as a speech utterance of the first user. For example, the means may include a microphone and a speech recognition system for transforming the utterance to a character string used as the input.

The system may further include a means for determining a first target phrase, as described in the above. For example, the means may be adapted for comparing the input to at least a part of the first template phrases included in the database. The part may for example be determined by analyzing and by comparing a semantic context of the input to a context of the first template phrases, the context of the first template phrases being marked, e.g. by an identifier, in the database.

The first target phrase may correspond to a certain first template phrase of the database, which certain first template phrase may at least partly match or be related to the input. The matching may be analyzed as described in the above, e.g. by replacing placeholders, by applying matching algorithms, or the like.

Further, the system may include means for determining a second target phrase being a translation of the first target phrase. The second target phrase may for example correspond to a certain second template phrase associated with the certain first template phrase in the database. As described in the above, the second template phrase may have been determined as a translation of the first template phrase, e.g. during a former conversation, and may have been approved and/or ranked by a translator, such as a human translator.

The system may further include a second device having a means for outputting the second target phrase. The second device may, for example, be remotely located, such that the second target phrase is to be sent to the second device over a network, such as the internet or a telecommunications network, and that the second device receives the second target phrase from the network.

The second target phrase may then be output to a user of the second device. For outputting the second target phrase as a string of characters, a graphical display of the second device may be used. Alternatively or in addition, the second target phrase may also be output acoustically. For the acoustical output, a text to speech conversion may be performed, e.g. at the second device, or the second target phrase may have been transformed to an audio output at the first device or at a further server forming part of the system. The acoustical output may be rendered to the user of the second device via a loudspeaker.

A server for inter-lingual electronic communication may include a storage adapted to store a database in accordance with the database described in the above.

Further, the server may include a communication unit adapted to receive an input of a first device, and adapted to send an output to the second device, thereby allowing reception and transmission of messages of the inter-lingual electronic communication. The server may therefore be located anywhere in a communication network, and may be remote from the first and/or the second device.

The server may further include a data processor adapted to determine a first and second target phrase, e.g. in accordance with the method described in the above. Further, the data processor of the server may be adapted to determine the output corresponding to, e.g. in accordance with, the second target phrase.

A device for inter-lingual electronic communication may include a database access unit, a user interface, a data processor, and a communication unit. The device may be, for example, a personal computer, a laptop, a mobile communication device like a mobile phone, a handheld computer, or a personal digital assistant, or any kind of electronic device supporting communication and networking facilities.

The database access unit may be adapted to access the database, which database may be locally or remotely located, i.e. stored. For example, the database may be included in a local storage, and may be a personal instance of a central database, the central database including translations as described in the above. For example, the central database may include several languages and translations related to a large number of contexts. The personal instance of the database located locally in the storage of the device may, however, only include translations from a native language of the user to languages of his common communication partners. The personal instance of the database may further be restricted to translations related to semantic contexts often referred to by the user of the device.

The local instance of the central database may be updated frequently, e.g. at regular intervals, and may therefore provide a suitable basis for translating large parts of the user's communications.

However, in case that the personal instance of the database is too limited, i.e. does not provide a first template phrase suitable for translating an input of the user, the central database may be accessed. In this case, the database access unit may firstly provide access to the personal instance of the database, and may secondly provide access to the central database. Alternatively, for example if the device has a low storage capacity, no personal instance of the database may be stored, and the database access unit may only provide access to the remotely located central database.

The user interface of the device may be adapted to receive an input from the user. For receiving the input, a graphical user interface including a display and an input means like a keyboard or a pointing device may be provided. Alternatively, an acoustical user interface including a microphone and a loudspeaker may be used. For example, if the device is a mobile phone, the user interface used for telephone conversations may also be used for supporting inter-lingual electronic communication in accordance with the embodiments of the method as described in the above. The user interface of the device may further be adapted to output the set of target phrases, and to receive the selection indicating a first target phrase selected from the set of target phrases.

The data processor of the device may be adapted to determine, as described in the above, a first target phrase based on the input. Further, the data processor may be adapted to determine a second target phrase being a translation of the target phrase, as described in the above. For determining the first and the second target phrase, the database may be queried via the database access unit, as described in the above. Thereby, the input may be translated by accessing translations included in the database and stored in form of the first and second template phrases associated with each other.

The communication unit of the device may be adapted to transmit the first target phrase and/or the second target phrase over a network, e.g. when determining the first and second target phrases, or when transmitting the second target phrase previously determined to a further device of a second user the user of the device is communicating with. The communication unit may further be adapted to receive, over the network, a further second target phrase, e.g. from a communication partner. The further second target phrase received by the communication unit from the network may then be output by the user interface of the first device to the user.

Further, a computer readable storage medium including computer program instructions may be provided, the computer program instructions being adapted to cause a computer, device, and/or server to execute a method for inter-lingual electronic communication in accordance with the embodiments of the method described in the above.

Further details of the invention will become apparent from a consideration of the drawings and ensuing description.

### BRIEF DESCRIPTION OF THE SERVERAL VIEWS OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description. The elements of the drawings are not necessarily to scale relative to each other. Like reference numerals designate corresponding similar parts.
- Fig. 1: illustrates an embodiment of a method for inter-lingual electronic communication.
- Fig. 2: illustrates a further embodiment of the method for inter-lingual elec- tronic communication.
- Fig. 3: illustrates an embodiment of a graphical user interface supporting an embodiment of the method for inter-lingual electronic communi- cation.
- Fig. 4: illustrates a frequency of usage of English phrases which may be included in a translation database.
- Fig. 5a: illustrates an embodiment of a method, system, and device for inter- lingual electronic communication supporting automatic translations.
- Fig. 5b: illustrates a further embodiment of the method, system and device for inter-lingual electronic communication, in which the translation is supported by a human translator having access to translation software.
- Fig. 5c: illustrates a further embodiment of a method, system and device for inter-lingual communication based on an acoustic input and output.
- Fig. 5d: illustrates a further embodiment of a method, system and device for inter-lingual electronic communication, in which a personal sentence suggestion database is provided within a sphere of the first user, and in which a pronunciation or text to speech database is provided within a sphere of the second user.
- Fig. 5e: illustrates a further embodiment of a method, system and device for inter-lingual electronic communication, in which a personal transla- tion database is located in the sphere of the first user.
- Fig. 6: illustrates a further embodiment of a system and including further embodiments of devices for inter-lingual electronic communication.
- Fig. 7a: illustrates background operations related to disambiguation in a fur- ther embodiment of a method for inter-lingual communication and including further embodiments of devices for inter-lingual electronic communication.
- Fig. 7b: illustrates further background operations related to fuzzy-logic moti- vated disambiguation in a further embodiment of a method for inter- lingual communication and including further embodiments of devices for inter-lingual electronic communication.
- Fig. 7c: illustrates further background operations related interjection clear- ance and replacement with placeholders and to foreground opera- tions amending the target phrase in a further embodiment of a method for inter-lingual communication and including further em- bodiments of devices for inter-lingual electronic communication.
- Fig. 8: illustrates a state model of sentences in a further embodiment of a method for inter-lingual communication and including further em- bodiments of devices for inter-lingual electronic communication.

### DETAILED DESCRIPTION

In the following, embodiments of the invention are described. It is important to note, that all described embodiments in the following may be combined in any way, i.e. there is no limitation that certain described embodiments may not be combined with others. Further, it should be noted that same reference signs throughout the figures denote same or similar elements.

It is to be understood that other embodiments may be utilized and structural or logical changes may be made without departing from the scope of the invention. The following detailed description, therefore, is not to be taken in a limiting sense, and the scope of the present invention is defined by the appended claims.

It is to be understood that the features of the various embodiments described herein may be combined with each other, unless specifically noted otherwise.

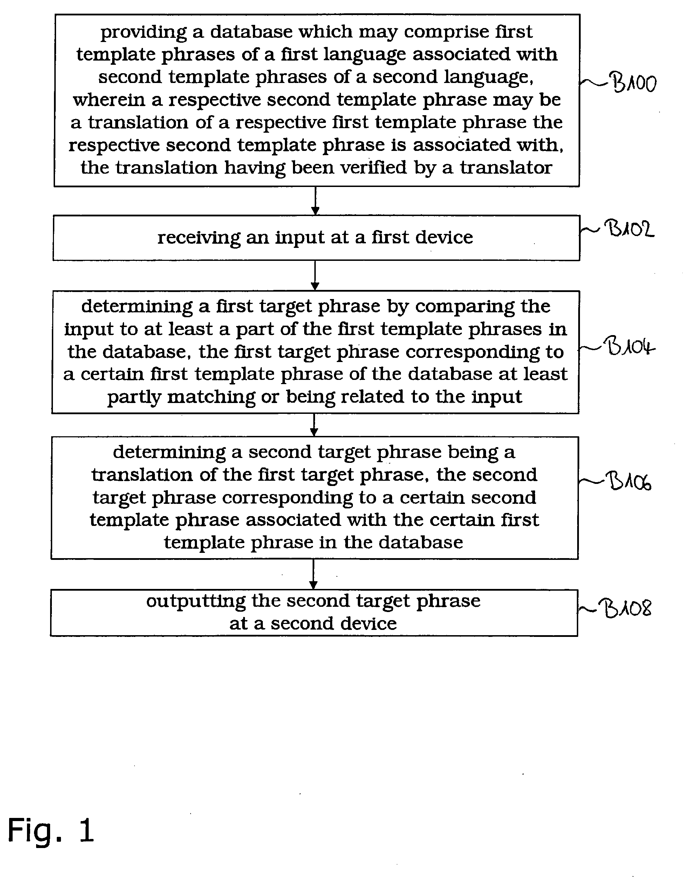

Fig. 1 illustrates an embodiment of a method for inter-lingual electronic communication. At B100, a database is provided. The database may comprise first template phrases of a first language associated with second template phrases of a second language. A respective second template phrase may be a translation of a respective first template phrase the respective second template phrase is associated with. The translation may have been verified by a translator.

At B102, an input is received at a first device. As described in the above, the device may be a personal device of a first user suitable for electronic communication, such as a mobile phone, a personal digital assistant, a handheld computer, a laptop, a personal computer, a telephone device. The input may be provided by the user via a textual, graphical or acoustical user interface, e.g. by a sequence of characters or a speech utterance.

At B104, a first target phrase may be determined by comparing the input to at least a part of the first template phrases in the database. As described in the above, the part of the first template phrases may, for example, be determined in accordance with a semantic context of the input. The first target phrase may be determined such that it corresponds to a certain first template phrase of the database at least partly matching or being related to the input. The matching may be determined as described in the above.

At B106, a second target phrase being a translation of the first target phrase may be determined. The second target phrase may correspond to a certain second template phrase associated with the certain first template phrase in the database. As described in the above, determination of the first and second target phrases may be performed by replacing placeholders and by analyzing any kinds of relations between the input, the certain first template phrase and the first target phrase, and between the second template phrase and the second target phrase.

At B108, the second target phrase may be output at a second device. Since the second device may be remotely located from the first device, any of blocks B104, B106 and/or B108 may include sending the first target phrase and/or the second target phrase to the second device. The second device may be a personal device of a second user suitable for electronic communication, such as a mobile phone, a personal digital assistant, a handheld computer, a laptop, a personal computer, a telephone device.

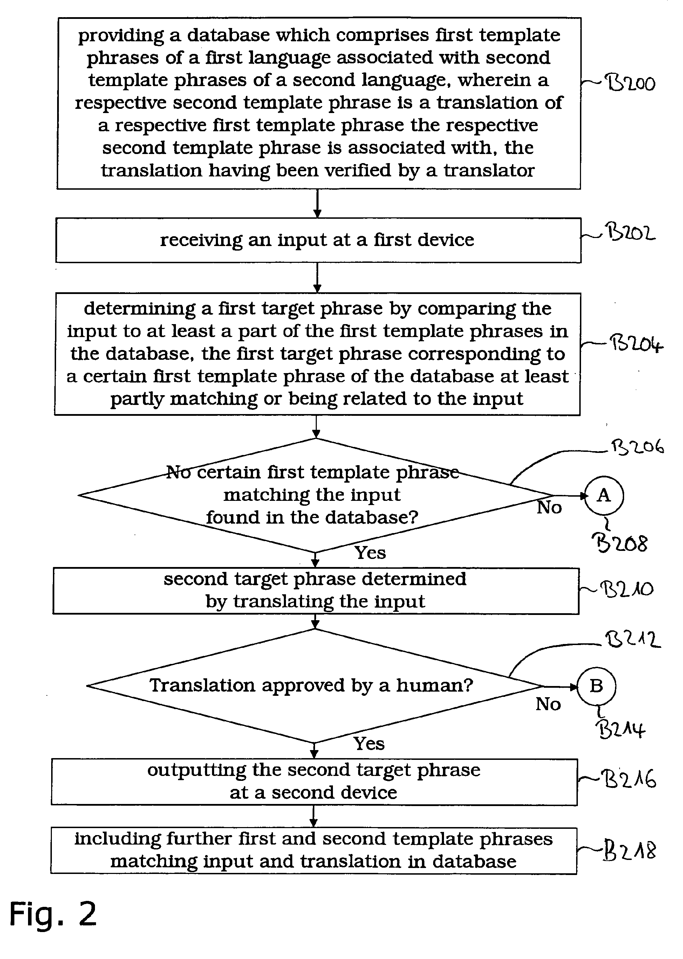

In Fig. 2, a further embodiment of the method for inter-lingual electronic communication is illustrated. Blocks B200 to B204 mutually correspond to blocks B 100 to B104 of Fig. 1. At B206, it is however checked whether a certain first template phrase matching the input is found in the database. If the certain first template phrase matching the input is found in the database (branch A), operation is continued at B208, e.g. by proceeding in accordance with blocks B104 to B108 of Fig. 1.

If, however, no certain first template phrase matching the input is found in the database, operation is continued as B210 by determining a second target phrase based upon the translation of the input. The translation may be proposed by a user of the first device, by a user of a community practicing the method in common, by a translation software, or by a human translator.

At B212, it is checked whether the translation has been approved by a human, e.g. by a translator having a predetermined credibility. As described in the above, the human translator may for example be an employee of the community or of a provider providing a service for inter-lingual electronic communication in accordance with an embodiment of the method.

If the translation has not been approved by a human (branch B), operation may be continued at B214. At this branch, it may, for example, be determined if the translation may be used for supporting the ongoing communication, or if it is necessary to provide a further proof of correctness before outputting the second target phrase to a second device. Further, it may be determined if the translation may or may not be included in the database. A decision may be taken in accordance with quality requirements for the translations included in the database.

If, however, the translation has been approved by a human, operation may be continued at B216 by outputting the second template phrase at the second device.

At B218, e.g. after having supported the ongoing conversation, further first and second template phrases may be determined in accordance with the input and the translation. The further first and second template phrases may be included in the database.

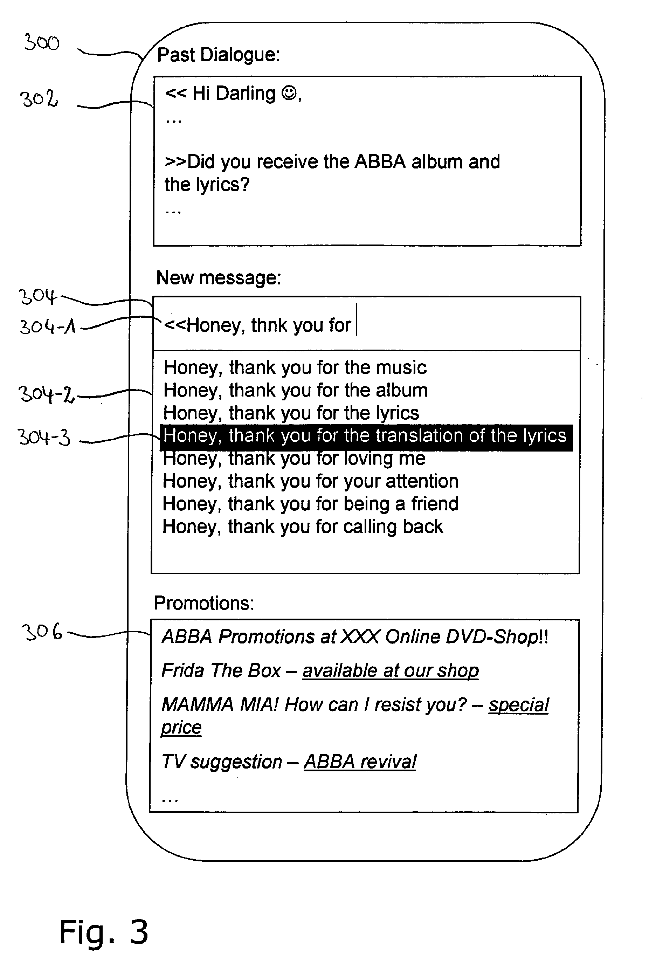

Fig. 3 illustrates a graphical user interface 300 supporting an embodiment of the method of inter-lingual electronic communication. Graphical user interface 300 reserves a first part 302 of a display for displaying the past dialogue, displaying messages exchanged between the respective users of the first and second devices. It should be noted that at the first device to which Fig. 3 relates, all messages are displayed in a first language e.g. native to the user of the first device, in the example the English language.

In a second part 304 of graphical user interface 300, new messages entered and/or determined may be displayed. In the example, an input box 304-1 for entering character strings e.g. via a keyboard is provided. Beneath input box 304-1, a dropdown list 304-2 for displaying suggestions for continuing the input, e.g. corresponding to the set of target phrases described in the above, is provided. From the set of target phrases, a first target phrase may be selected, e.g. by positioning a selection bar 304-3 to mark one of the target phrases. The selection may then be confirmed by the user, e.g. by pressing a confirmation button of the keyboard.

Graphical user input 300 further reserves a third part 306 of the display to displaying further related content, such as commercial advertisings.

In the example, the dialogue has been opened by the user of the first device with a "Hi darling" including a smiley. This may indicate at the semantic context of the conversations related to love of friendship, and that the mood of the user of the first device may be considered as happy.

During the conversation, the question "Did you receive the ABBA album and the lyrics?" has been received at the first device, indicating that a theme or topic of the conversation is related to pop music, ABBA, and a gift sent in the past. Further, it may be expected but the user of the first device will respond to the question.

In response, the user of the first device enters "Honey, thnk you for", which character string may easily be identified as "Honey, thank you for" by correcting a spelling error. The expression "Honey" may further be identified as a form of address between lovers, and may therefore be suppressed or replaced by a placeholder.

In view of the information defining the semantic context described in the above, an in view of the input typed by the user, the remaining phrase "thank you for" may then be used as a basis for determining the set of target phrases matching the input, wherein each of the target phrases included in the set may correspond to one of the first template phrases included in the database.

For providing a list of target phrases, the set of target phrases may be sorted e.g. in accordance with the semantic context determined. In the example, target phrases related to music, the gift, translations, love and/or friendship and to the fact of holding a telephone conversation are provided. In the list of target phrases, the form of address "Honey" that may be have suppressed for the database query may again be included.

By means of selection bar 304-3, which may be positioned e.g. by use of upward/downward keys, the user may select one of the set of target phrases as the first target phrase. In the example, the phrase "Honey, thank you for the translation of the lyrics" is selected and may therefore be determined as the first target phrase.

Meanwhile content corresponding to the semantic context determined, such as promotions related to the context, may displayed in third part 306. In the example, ABBA fan shop offers and a television program suggestion, for example provided by an online electronic program guide, are provided. Further, an ABBA song may be rendered as background music.

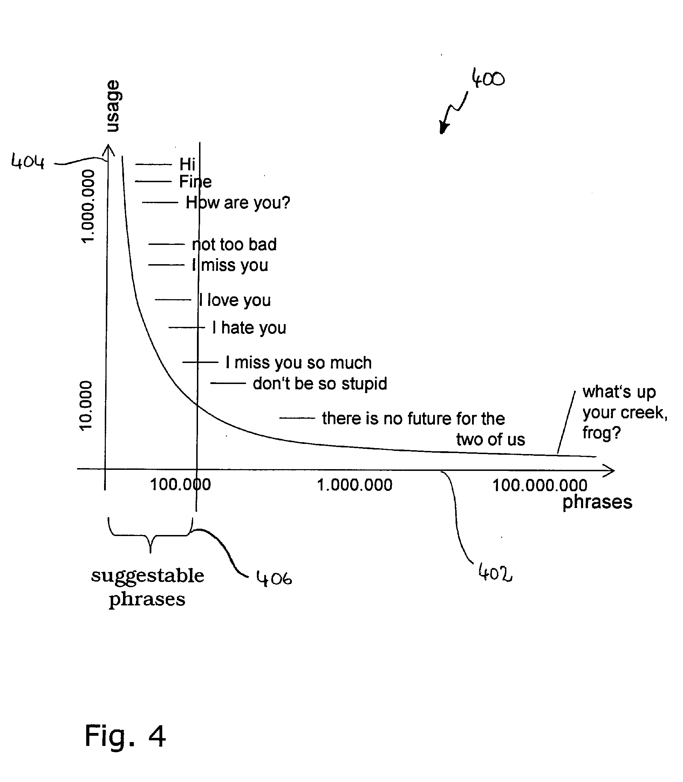

In Fig. 4, a diagram 400 indicating a frequency of usage of English phrases is illustrated. The phrases are numbered on an axis 402 over which the frequency of usage is indicated on a second axis 404.

From diagram 400, it becomes clear that phrases like "Hi", "Fine" and "How are you?" are used with a very high frequency. Further, phrases like "not too bad", "I miss you", "I love you", "I hate you", and "I miss you so much" also occur with a very high frequency. These sentences may therefore be expected to be included into the database/dictionary after a substantially short period of time of e.g. several weeks, and may therefore be considered as suggestible phrases, as indicated with parentheses 406.

Further phrases like "Don't be so stupid" or "There is no future for the two of us" may or may not be included rapidly in the database. However, by the time it may be expected that the number of suggestible phrases increases so as to include e.g. these further phrases.

However, it may also be expected that very special phrases like "What's up your creek, frog?" may not be included even after a substantially long period of e.g. several months or years, such that human translation support may still be needed.

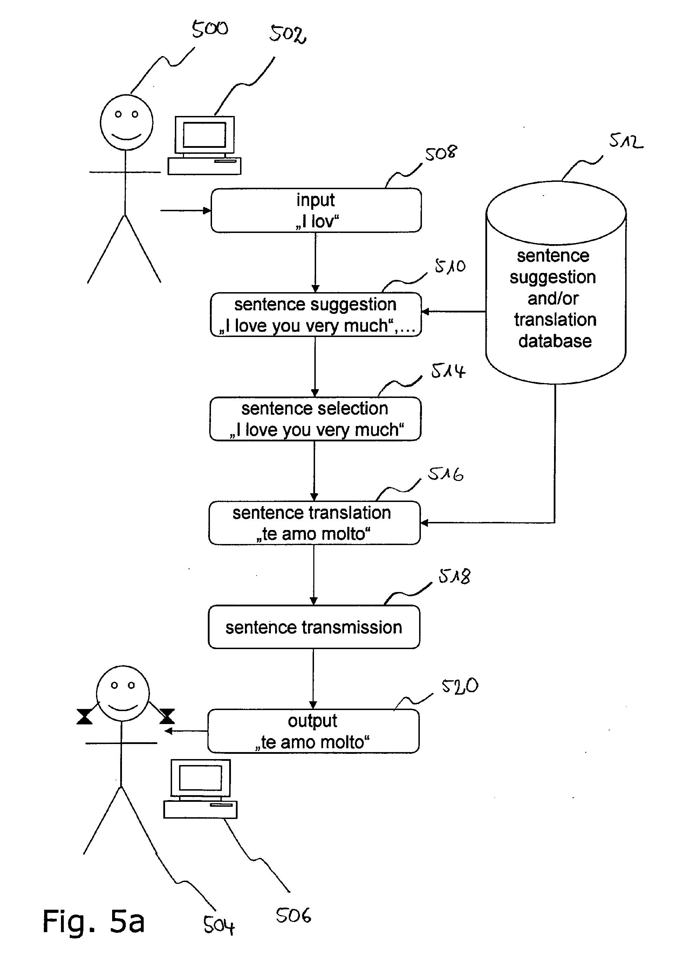

In Fig. 5a, an embodiment of the method, the system, and the device for inter-lingual electronic communication providing automatic translations is illustrated. In the embodiment, a first user 500 of a first device 502, which may be the first user's personal computer, is communicating with a second user 504 using a second device 506, which may be a second user's personal computer.

In the use case illustrated, first user 500 inputs the character string "I lov" at 508, e.g. by typing at his keyboard. After having typed the five characters, a sentence suggestion 510 is automatically retrieved from a sentence suggestion and/or translation database 512. Inter alia, the sentence "I love you very much" is suggested to first user 500.

At 514, first user 500 selects the suggested sentence.

At 516, a translation to the selected sentence is retrieved from a sentence suggestion and/or translation database 512.

At 518, the translated sentence is transmitted to second device 506 of second user 504, where it is output, e.g. displayed at a display of second device 506, at 520.

In the example, the character string "I lov" corresponds to the input, the sentence suggestion "I love you very much" forms part of the set of target phrases and corresponds to a first template phrase included in the sentence suggestion and/or translation database 512. The sentence translation "te amo molto" corresponds to the second template phrase, which is a translation of the first template phrase to the Italian language.

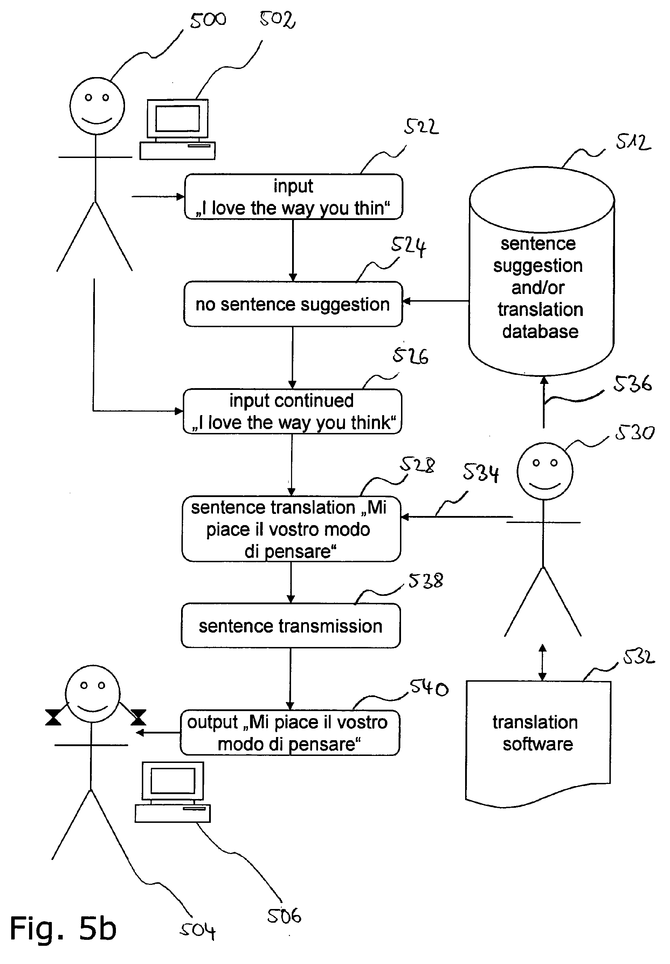

In Fig. 5B, a different use case is depicted, in which first user 500 continues his input without any sentence suggestion. At 522, the character string "I love the way you thin" is entered, to which no sentence suggestion is provided at 524 from sentence suggestion and/or translation database 512. By typing at his keyboard, first user 500 continues the input to "I love the way you think" at 526.

Since no set of template phrases has been suggested, it may be supposed that the input does not correspond to any of the first template phrases included in sentence suggestion and/or translation database 512. Therefore, also no sentence translation can be found in sentence suggestion and/or translation database 512. The sentence translation may therefore provided by a human translator 530, who may be supported by using a translation software 532 he is interacting with.

After having translated and/or approved, e.g. verified, the sentence translation "Mi piace il vostro modo di pensare", the sentence translation may firstly be included into the ongoing communication, as illustrated by first arrow 534. Secondly, human translator 530 may provide a further first template phrase corresponding to the input "I love the way you think" and a further second template phrase corresponding to the translation "Mi piace il vostro modo di penziare" to be associated with the further first template phrase, and to include the further first and second template phrases associated with each other into sentence suggestion and/or translation database 512, as illustrated with second arrow 536.

The translated sentence is transmitted to second device 506 of second user 504 at 538, where it is output at 540, e.g. by displaying it at a display of second device 506.

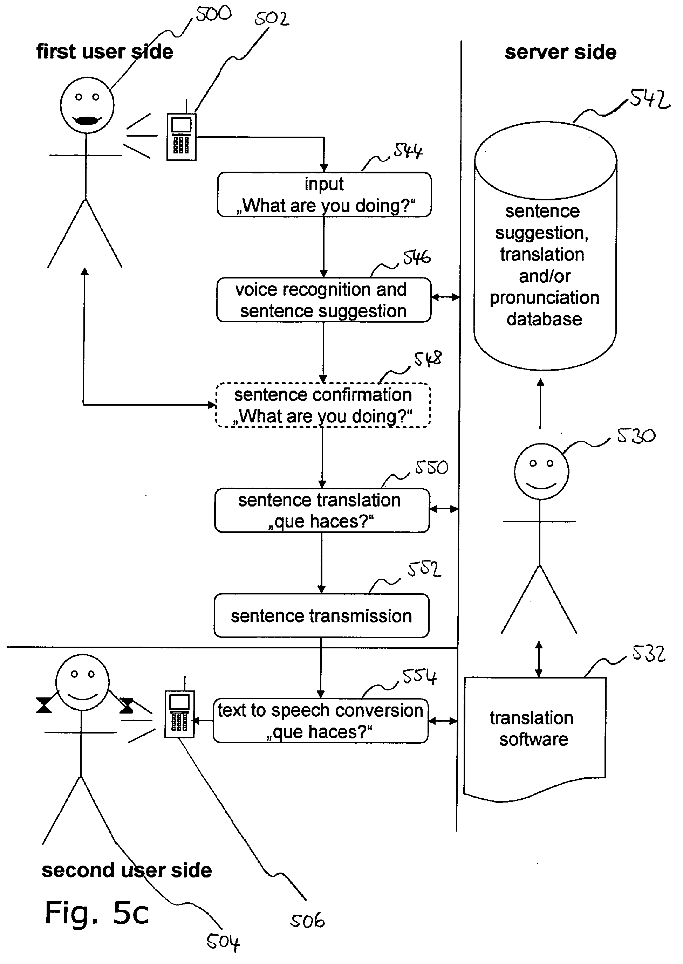

In Fig. 5c, first user 500 and first device 502 are located at a first user side. First device 502, in the case depicted, is a mobile phone or handheld computer supporting acoustical input and output.

Second user 504 and second device 506 are located at a second user side. In the case depicted, also second device 506 is assumed to be a mobile phone or handheld computer supporting acoustical input and output.

Further, on a server side, a sentence suggestion, translation and/or pronunciation database 542 is provided. Additionally, human translator 530 supported by translation software 532 and having access to database 524 is available. Alternatively or in addition, a whole community of human translators may be available and accessible for translation requests at the server side.

At 544, first user 500 utters "What are you doing?", which utterance may be considered to be the input. The utterance may be processed by voice recognition at 546. The voice recognition may include an access to sentence suggestion, translation and/or pronunciation database 542, e.g. a request for pattern matching with the first template phrases included in the database. As a result of the voice recognition, a sentence suggestion may be provided at 546. In the example, the suggested sentence "What are you doing?" is confirmed at 548 by first user 500.

At 550, the confirmed sentence "What are you doing?" is translated into the Spanish sentence "Que haces?". The translation may be retrieved from sentence suggestion, translation and/or pronunciation database 542 based on the suggested and confirmed first template phrase, e.g. by providing a second template phrase associated with the first template phrase corresponding to the input.

The translated sentence is transmitted to the second user side at 552, where it is transformed by a text to speech conversion into an audio output of "Que haces?", e.g. by requesting and retrieving pronunciation information related to the second template phrase corresponding to the second target phrase from sentence suggestion, translation and/or pronunciation database 542. A corresponding speech output may then be rendered at 544 to second user 504 via second device 506.

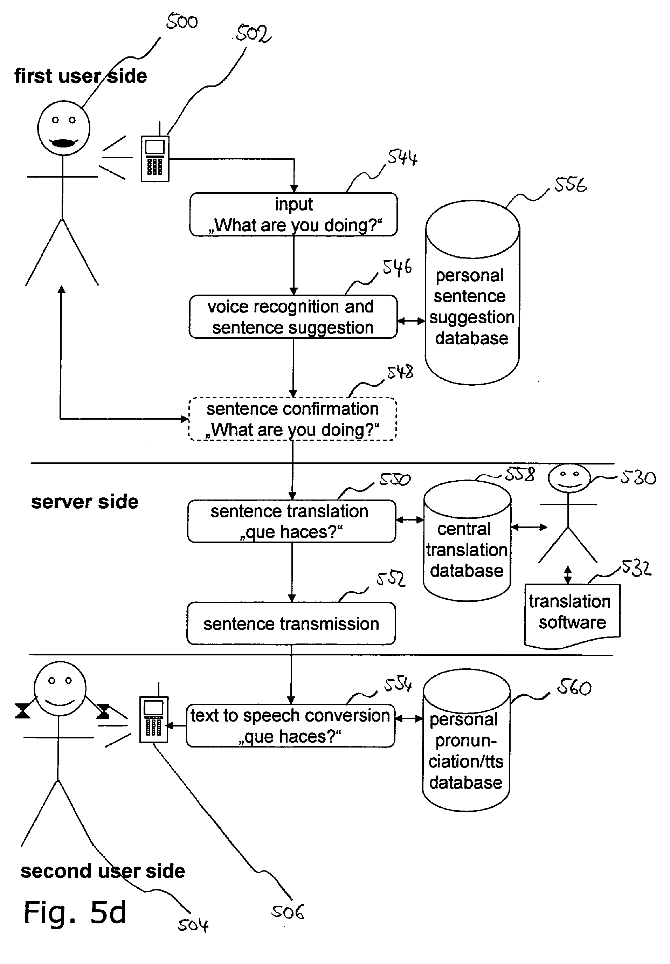

Fig. 5d illustrates a corresponding use case, in which, however, first user 500 holds a personal instance of the database, i.e. a personal sentence suggestion database 556. Personal sentence suggestion database 556 may for example be accessed for voice recognition and sentence suggestion at 546.

Personal sentence suggestion database 556 may be adapted to a personal profile, e.g. may include sentences of a native language of first user 500, and may include sentences in accordance with the usual style of communication of first user 500 and related to the semantic contexts often used during the conversations of first user 500. Further, personal sentence suggestion database 556 may include sentences in accordance with a personal style of communication of first user 500. Database entries not corresponding to the native language, the semantic contexts and topics, or the style of communication of first user 500 may be excluded from the personal instance of the database, i.e. personal sentence suggestion database 556, for saving local storage at first device 502. Providing personal sentence suggestion database 556 at the first user side may help to efficiently and rapidly provide suggestions, e.g. the set of target phrases.

At 550, the sentence translation into Spanish is provided at the server side via a request to a central translation database 558. As described on the above, the translation may further be supported by human translator 530 having access to translation software 532.

A quick access to a translation of the first target phrase determined by first user 500 may, for example, be supported by an identifier identifying the first template phrase which has been the basis for determining the first target phrase, and which may be common in personal sentence suggestion database 556 and central translation database 558. The common identifier of the first template phrase may, for example, be transmitted from the first user side to the server side with the confirmed sentence, i.e. the first target phrase.

After sentence translation, the translated sentence "Que haces?" is transmitted at 552 to the second user side, where it is converted at 554 into an audio output by text to speech conversion.

For text to speech conversion, a personal instance of the database of second user 504 may be used, e.g. a personal pronunciation/TTS database 560. Access to this database may also be facilitated on the basis of the common identifier identifying the first template phrase and accordingly the second template phrase associated with the first template phrase, which has been basis for determining the second target phrase which is to be converted to speech.

The local storing of personal pronunciation/TTS database 560 allows an efficient sentence transmission, e.g. based on a character string, requiring substantially few communication bandwidth between the server side and the second user side. Further, the text to speech conversion may be performed at second device 506, which allows saving processing power at the server side.

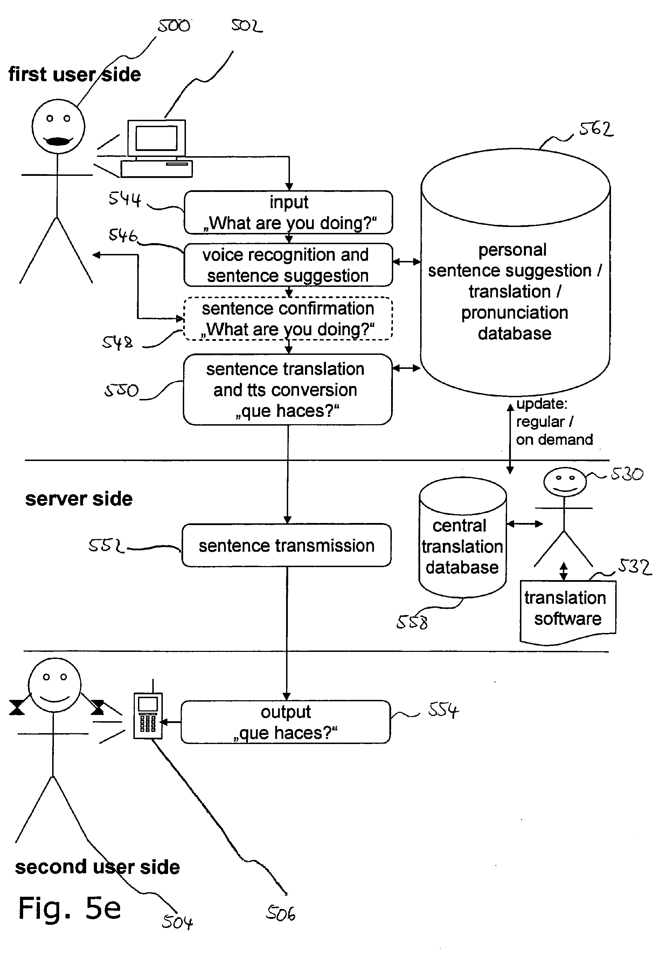

In Fig. 5e, first device 502 is a personal computer of first user 500, which personal computer may be supposed to have large amount of storage and processing power. Second device 506 of second user 504 may however be a mobile device having limited storage and processing power.

In the example, first device 502 may include a comprehensive instance of the database, i.e. a personal sentence suggestion/translation/pronunciation database 562.

Personal sentence suggestion/translation/pronunciation database 562 may be adapted to support conversations of a first user 500 e.g. by building personal sentence suggestions related to the native language, the preferred semantic contexts or topics, and a preferred style of communication of the first user. The personal sentence suggestions thereby form a subset of the first template phrases. Further, personal sentence suggestion/translation/pronunciation database 562 may include translations, i.e. second template phrases associated with the first template phrases, which translation may be adapted to the languages of further users first user 500 is often communicating with. Further, pronunciation data may also be stored, e.g. in association with the second template phrases, in order to convert the second target phrases corresponding to the first target phrases selected by first user 500 to speech at the first user side. Personal sentence suggestion/translation/pronunciation database 562 may accordingly support all activities of first user 500, e.g. input 544, voice recognition 546, sentence confirmation 548, sentence translation and text to speech conversion 550.

Sentence transmission 552 may then be performed without any further support from the server side, e.g. by a transfer over a communication network, to the second device 506 of second user 504, where the sentence is output at 554 without any further conversions.

For supporting conversations of first user 500, personal sentence suggestion/translation/pronunciation database 562 may be updated regularly, e.g. whenever new entries corresponding to a user profile of first user 500 have been inserted to central translation database 558.

Further, an on demand update may be performed if no first template phrase matching the input is found in personal sentence suggestion/translation/pronunciation database 562. In this case, a translation request may be sent to the server side. The translation request may be answered by on the one hand querying central translation database 558 for a matching first template phrase, and by on the other hand requesting support from human translator 530 having access to translation software 532. Thereby, conversations of first user 500 may be supported by central translation database 558 and by the community of translators with high quality. Further, processing power is saved at the server side, as well as communication bandwidth between the first user side, the server side and the second user side.

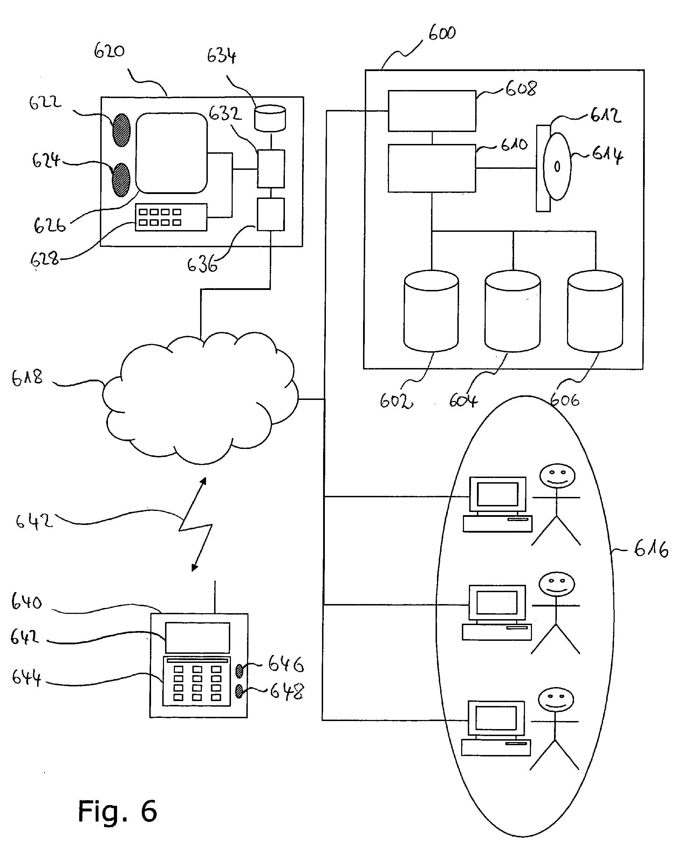

In Fig. 6, a further embodiment of a system for inter-lingual electronic communication is illustrated. In the embodiment, a server 600 is provided. At server 600, a sentence suggestion database 602, a translation database 604, and a pronunciation database 606 are provided, which databases may support inter-lingual electronic communication as described in the above. Databases 602, 604, 606 may be stored in a local storage of the server, or may be stored in a distributed manner, e.g. in a server or storage cluster.

Further, server 600 includes a communication unit 608 for communicating with other parts of the system. Further, data processor 610 is provided. Additionally, a reading unit 612 for reading a computer-readable storage medium 614 is provided, which computer-readable storage medium 614 may include computer program instructions adapted to cause data processor 610 to execute an embodiment of the method for inter-lingual electronic communication, e.g. in accordance with any of the embodiments described in the above. The computer program instructions may further be adapted to be transferred to other parts of the system and to cause them to contribute to the embodiment of the method.

Further, the system includes a community of human translators 616, which human translators may be supported by further electronic devices, providing, for example, access to translation software, and access to server 600 via a communication unit 608.

Via a network 618, server 600 and community of human translator 616 may be accessed by the first device 620 for inter-lingual electronic communication. The first device may provide a user interface including a loudspeaker 622 for audio output, a microphone 624 for acoustical input, a display 626 for graphical output and a keyboard 628 for user input. All components may be connected to a data processor 632 providing access to a local storage 634 and to a communication unit 636 enabling communication e.g. with server 600 and community of human translator 616 via network 618. Further, communication with a second device 640 for inter-lingual electronic communication via network 618 and, for example, via a further telecommunications network 642 may be supported by communication unit 636.

Local storage 634, data processor 632, and communication unit 636 may form a database access unit adapted to access a local or remote instance of the database supporting the inter-lingual electronic communication. For example, processor 632 may first query a local instance of the database stored in storage 634 and may, in case that no matching first template phrase has been found in the local instance of the database, access the remote instances of databases 602, 604, and/or 606 via communication unit 636 and network 618. Thereby, an efficient and dynamic organization of the database may be achieved, providing on the one hand quick access to sentence suggestions and translations, and on the other hand a full support from the central databases and from further the community of human translators.

Second device 640 may be a handheld device such as a mobile phone or handheld computer including a graphical display 642, a keypad 644, a loudspeaker 646, and a microphone 648.

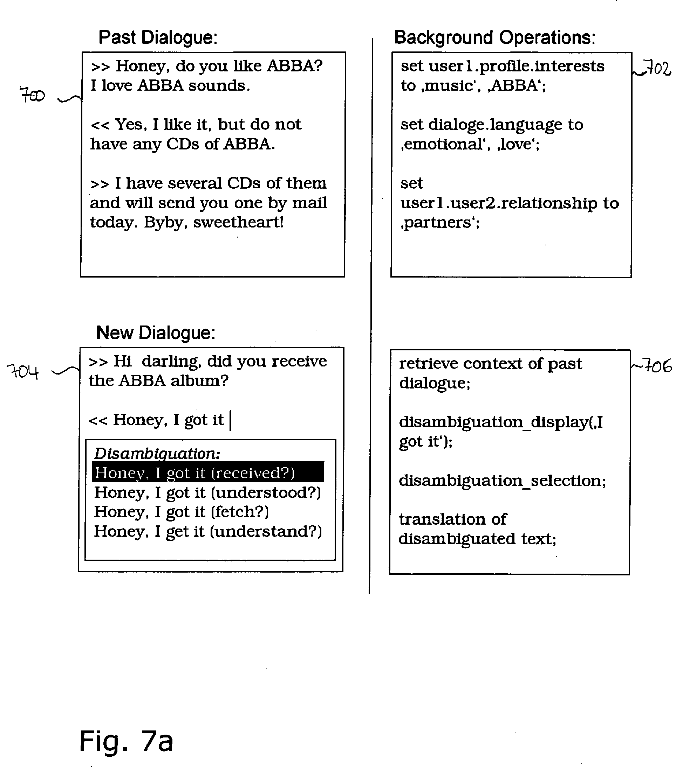

In Fig. 7a, a past dialogue 700 is illustrated, in which the messages "Honey do you like ABBA? I love Abba sounds", "Yes. I like it, but I do not have any CDs of ABBA", and "I have several CDs of them and will send you one by mail today. Bye bye Sweet Heart!" have been exchanged.

During past dialogue 700, background operations illustrated at 702 may have been performed, e.g. at a server supporting an embodiment of the method for inter-lingual electronic communication. For example, in a user profile of a first user, interests of the first user may be set to "Music" and "ABBA". Further, the language of the dialogue may be set to "emotional" and "love". Further, the kind of relationship between first and second users may be stored e.g. in the profile of the first user, for example by setting of the relationship to "partners".

In a new dialogue 704, which may take place at a later point in time between the same users, the message "Hey Darling, did you receive the ABBA album?" is received by the first user. As illustrated, the first user types, as an answer, "Honey. I got it".

During new dialogue 704, the system supporting the embodiment of the method may perform the background operations as illustrated at 706. For example, a semantic context and the user profiles of the first and second users may be retrieved.

For translating the phrase "Honey, I got it", a disambiguation may be necessary. For example in the database, several instances of the template phrase "I got it" may be stored, each of the instances being annotated with a semantic meaning of the phrase, and each of the instances having a different translation. The instances may be used for determining the set of target phrases, which target phrases may also be annotated with the meaning of the respective instance. A disambiguation selection may be carried out, e.g. manually by the user and/or automatically by the system as a background operation. For example, the disambiguation selection may be carried out in view of the profiles of the communicating users, the semantic context of new dialogue 704 or the semantic context of past dialogue 700. An example for automatic disambiguation selection will be presented below. After the disambiguation selection has been carried out, the disambiguated text, e.g. the selected first target phrase, may be translated, as described in the above.

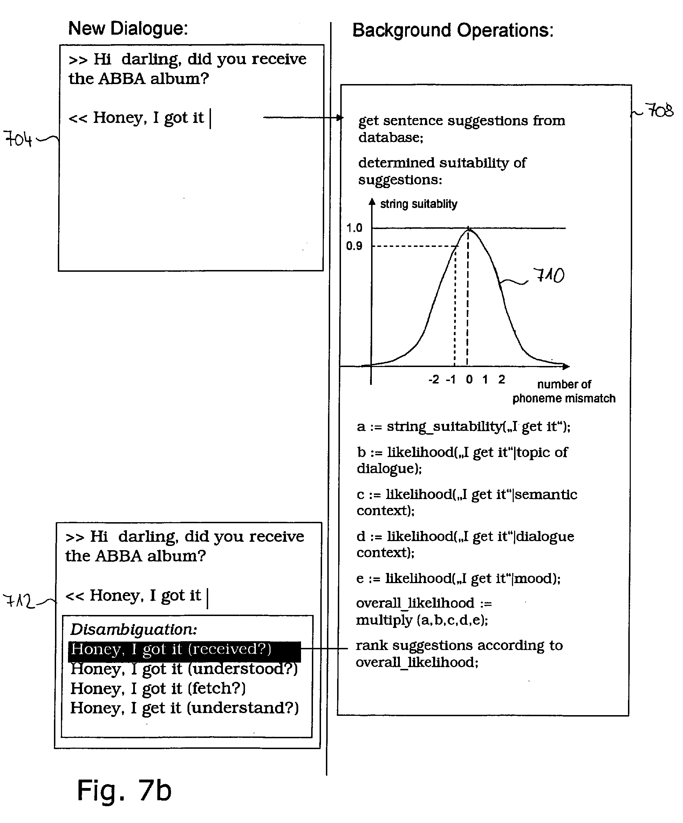

Figure 7b illustrates the automatic disambiguation of the first template phrase "I got it" of new dialogue 704. During background operations 708, sentence suggestions matching the input "I got it" may be retrieved from the database. For each of the sentence suggestions, e.g. for each of the set of target phrases matching the input, a suitability maybe determined, e.g. in a fuzzy logic-motivated determination algorithm, as described in the following.

For each of the target phrases, a number of phoneme mismatches, indicating of a number of phonemes not corresponding to phonemes used in the input may be determined. Depending on the number of phoneme mismatches, a string suitability for each of the target phrases may be determined, e.g. by evaluating a suitability function, such as function 710 essentially corresponding to a Gaussian distribution, based on the number of mismatches. In the example, the target phrase "I get it" would have a string suitability of 0.9.

In further steps, further likelihoods may be determined for each of the target phrases. These likelihoods may for example be determined on the basis of conditional probabilities, e.g. a conditional probability of the target phrase "I get it" in view of the topic of the dialogue, the semantic context, of the dialogue context, or the mood of the user who has entered the input.

For determining an overall likelihood or overall suitability, the string suitability and the further likelihoods may be multiplied, as shown in the example. The suggestions, i.e. the target phrases included in the set of target phrases, may be ranked according to the overall likelihood.

As illustrated at 712, the set of target phrases suggested from the database may be displayed to the user depending on their overall likelihood. In the example, the target phrase "Honey, I get it (understand)" may have a low ranking due to the phoneme mismatch, and due to the fact that the other target phrases are more likely to occur as an answer to the question "Did you receive the ABBA album?", and may therefore be resented at a bottom of a list sorted according to the ranking.

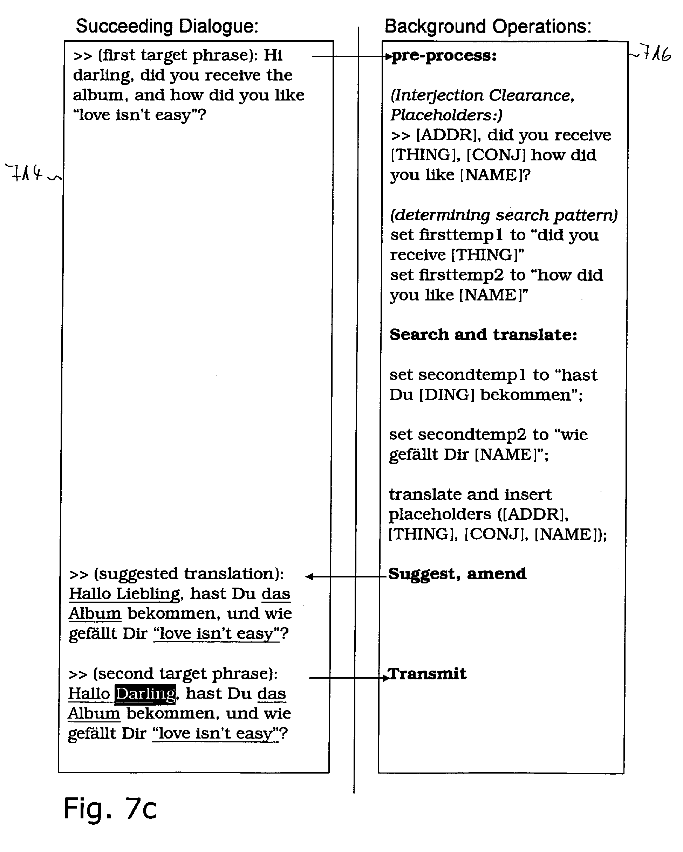

In Figure 7c, further background operations that may occur during a succeeding dialogue 714 are illustrated at 716. In the example, the first target phrase "Hi Darling, did you receive the album, and how did you like "love isn't easy"?" has been entered by the first user. In the background, a pre-processing of the first target phrase may take place, during which interjections may be cleared and parts of the first target phrase may be replaced by place holders. For example, "Darling" may be replaced by the placeholder [ADDR], and "and" by [CONJ], marking a delimiter of partial phrases.

Based on the results, search patterns for searching in the database may be determined. In the example, a first template phrase firsttemp1 may be set to "did you receive [THING]" and a further first template phrase firsttemp12 may be set to "how did you like [NAME]".

Translations of these template phrases, e.g. to the German language, may be retrieved from the database and used for suggesting a second target phrase, e.g. a suggestion for a translation, to the first user. In the example, the suggested translation is "Hallo Liebling, hast Du das Album bekommen, und wie gefällt Dir "love isn't easy?".

As illustrated at 714, the suggested translation may be displayed to the first user, who may enter amendments, e.g. by positioning a cursor to specific parts of the suggested second target phrase, for example by using a specific button. In the example, the first user changes "Liebling" to "Darling". After having amended the second target phrase, the first user may enter his consent, e.g. by pressing an enter button, upon which the second target phrase maybe transmitted to the second user.

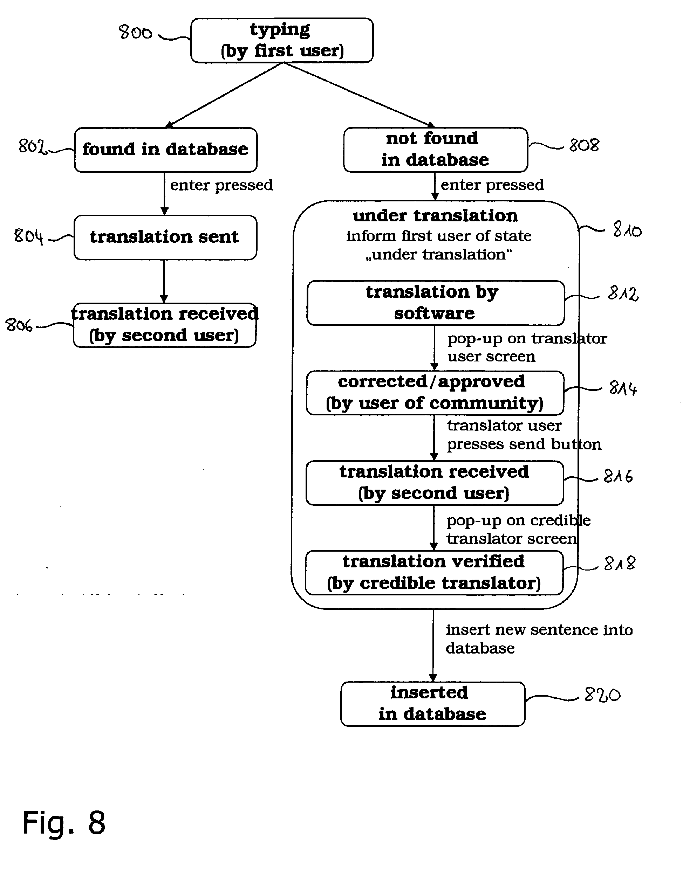

In Figure 8, a state model for sentences in an embodiment of the method is illustrated. For example, the sentence may be in a "typing" state 800 while it is typed by the first user. After having found the sentence in the database, the sentence may be in a "found in database" state 802. Upon consent of the first user, which consent may for example be entered by pressing an enter button, the sentence may be translated and sent to the second user. Afterwards, the sentence may be set to the "translation sent" state 804. After reception of the sentence by the second user, the sentence may be in a "translation received" state 806.

However, after having been typed by the first user, it may happen that the sentence is not found in the database. In this case, the sentence may be set to a "not found in database" state 808. After having been confirmed by the user, e.g. by pressing the enter button, the sentence may further be set to an "under translation" state 810, upon which the first user is informed of the fact that this sentence is under translation. A translation may, as a first try, be provided automatically, e.g. by software, as described in the above. Correspondingly, the sentence may be set to a "translation by software" state 812. The translation provided by the software may then pop-up on a translator user screen, the translator user forming part of the social community performing and supporting the embodiment of the method for inter-lingual communication. After having been corrected and/or approved by the translator user, the sentence may be set to a "corrected/approved" state 814. In this state, the translation may immediately be sent to the second user, and the sentence may be set to a "translation received" state 816. Further, the translation may pop-up on the screen of a credible translator, as described in the above. After the translation has been verified by the credible translator, the sentence may be set to "translation verified" state, which is a prerequisite for inserting the translated sentence into the database. Upon insertion, the sentence may be set to an "inserted in database" state 820.

Using a state model in accordance with the example illustrated in Figure 8 may help to ensure that only translations having been verified by a credible translator may be inserted in the database. However, quick support of the chatting first and second users may also be provided, since a translation may be sent to the second user as soon as a translation is found and approved by a member of the social community.

Although specific embodiments have been illustrated and described herein, it will be appreciated by those of ordinary skill in the art that a variety of alternate and/or equivalent implementations may be substituted for the specific embodiments shown and described without departing from the scope of the described embodiments. This application is intended to cover any adaptations or variations of the specific embodiments discussed herein. Therefore, it is intended that this invention be limited only by the claims and the equivalents thereof.

## Claims

1. A method for inter-lingual electronic communication, comprising:
providing a database which comprises first template phrases of a first language associated with second template phrases of a second language, wherein a respective second template phrase is a translation of a respective first template phrase the respective second template phrase is associated with, the translation having been verified by a translator;
receiving an input at a first device;
determining a first target phrase by comparing the input to at least a part of the first template phrases in the database, the first target phrase corresponding to a certain first template phrase of the database at least partly matching or being related to the input;
determining a second target phrase being a translation of the first target phrase, the second target phrase corresponding to a certain second template phrase associated with the certain first template phrase in the database; and
outputting the second target phrase at a second device.

2. The method of claim 1, wherein the first target phrase is determined by
providing a set of target phrases matching the input, wherein each of the target phrases included in the set corresponds to one of the first template phrases included in the database; and
receiving a selection of a user of the first device, the selection indicating a first target phrase selected from the set of target phrases.

3. The method of claim 1 or 2, wherein the first target phrase, the second target phrase and/or the set of target phrases is determined by analyzing a semantic context of the input.

4. The method of claim 3, wherein the semantic context is determined automatically and/or manually.

5. The method of any of claims 3 or 4, wherein the semantic context is determined by analyzing a preceding first and/or second target phrase of the user of the first device or of a user of the second device, and/or by analyzing a mood of the user of the first device and/or a profile describing personal preferences of the user of the first device and/or of the second device.

6. The method of any of claims 3 to 5, wherein a content is rendered at the first and/or second device, the content corresponding to the semantic context.

7. The method of any of the preceding claims, wherein the translator is a member of a social community.

8. The method of any of the preceding claims, wherein
the database further comprises third template phrases of a third language, a respective third template phrase being a translation of a respective first template phrase the respective third template phrase is associated with, the translation having been verified by a further translator, and wherein
a third target phrase being a translation of the first target phrase is determined and output at a third device, the third target phrase corresponding to a certain third template phrase associated with the certain first template phrase in the database.

9. The method of any of the preceding claims,
wherein, if no certain first template phrase matching or being related to the input is found in the database, the second target phrase is determined by translating the input, and
wherein a further first template phrase and a further second template phrase are included in the database and associated with each other, the further first template phrase corresponding to the input for which no certain first template was found and the further second template phrase corresponding to the determined second target phrase.

10. The method of claim 9, wherein the input, the second target phrase, the further first template phrase and/or the further second template phrase is approved by a human.

11. The method of any of the preceding claims,
wherein a style of communication is determined by analyzing at least one of a group including the input, a preceding first and second target phrase of the user of the first device, a preceding first and second target phrase of the user of the second device, a semantic context of the input, a user profile of the user of the first device, an age of the user of the first device, a user profile of a user of the second device, and an age of the user of the second device, and
wherein the first target phrase, the second target phrase and/or the set of target phrases is determined depending on the style of communication by analyzing identifiers descriptive of the style of communication included in the database.

12. The method of any of the preceding claims, wherein
the input is a speech utterance of the user of the first device, and/or wherein
the second target phrase is outputted as an audio output at the second device, the audio output being determined by a text-to-speech conversion or by pre-recorded audio data stored in the database in relation with the second template phrases.

13. A system for inter-lingual electronic communication, including
a database which comprises first template phrases of a first language associated with second template phrases of a second language, wherein a respective second template phrase is a translation of a respective first template phrase the respective second template phrase is associated with, the translation having been verified by a translator;
a first device having means for receiving an input;
means for determining a first target phrase by comparing the input to at least a part of the first template phrases in the database, the first target phrase corresponding to a certain first template phrase of the database at least partly matching or being related to the input;
means for determining a second target phrase being a translation of the first target phrase, the second target phrase corresponding to a certain second template phrase associated with the certain first template phrase in the database; and
a second device having means for outputting the second target phrase.

14. A server for inter-lingual electronic communication, including
a storage adapted to store a database in which first template phrases of a first language are associated with second template phrases of a second language, wherein a respective second template phrase is a translation of a respective first template phrase the respective second template phrase is associated with, the translation having been verified by a translator;
a communication unit adapted to receive an input of a first device and to send an output to a second device;
a data processor adapted to determine a first target phrase by comparing the input to at least a part of the first template phrases in the database, the first target phrase corresponding to a certain first template phrase of the database at least partly matching or being related to the input, further adapted to determine a second target phrase being a translation of the first target phrase, the second target phrase corresponding to a certain second template phrase associated with the certain first template phrase in the database, and further adapted to determine the output corresponding to the second target phrase.

15. A device for inter-lingual electronic communication, including a database access unit;
a user interface;
a data processor; and
a communication unit;
wherein the database access unit is adapted to access a data base, which database comprises first template phrases of a first language associated with second template phrases of a second language, wherein a respective second template phrase is a translation of a respective first template phrase the respective second template phrase is associated with, the translation having been verified by a translator,
wherein the user interface is adapted to receive an input from a user, wherein the data processor is adapted to determine a first target phrase by comparing the input to at least a part of the first template phrases in the database, the first target phrase corresponding to a certain first template phrase of the database at least partly matching the input, and further adapted to determine a second target phrase being a translation of the first target phrase, the second target phrase corresponding to a certain second template phrase associated with the certain first template phrase in the database, and
wherein the communication unit is adapted to transmit the first target phrase and/or the second target phrase over a network and further adapted to receive over the network a further second target phrase to be output by the user interface to the user.

## Amended claims

### Amended claims in accordance with Rule 137(2) EPC.

**1.** A method for inter-lingual electronic communication, comprising:
providing a database, at a server, the database comprising first template phrases of a first language associated with second template phrases of a second language, wherein a respective second template phrase is a translation of a respective first template phrase the respective second template phrase is associated with, the translation having been verified by a translator;
receiving an input of a first user at a first device;
transmitting the input to the server;
determining, at the server, a first target phrase by comparing the input to at least a part of the first template phrases in the database, the first target phrase corresponding to a certain first template phrase of the database at least partly matching or being related to the input;
determining, at the server, a second target phrase being a translation of the first target phrase, the second target phrase corresponding to a certain second template phrase associated with the certain first template phrase in the database; and
outputting the second target phrase at a second device to a second user, such that the first and second users are able to communicate with each other, wherein the first user inputs the input in the first language and the second user receives the respective translation in the second language.

**2.** The method of claim 1, wherein the first target phrase is determined by
providing a set of target phrases matching the input, wherein each of the target phrases included in the set corresponds to one of the first template phrases included in the database; and
receiving a selection of a user of the first device, the selection indicating a first target phrase selected from the set of target phrases.

**3.** The method of claim 1 or 2, wherein the first target phrase, the second target phrase and/or the set of target phrases is determined by analyzing a semantic context of the input.

**4.** The method of claim 3, wherein the semantic context is determined automatically and/or manually.

**5.** The method of any of claims 3 or 4, wherein the semantic context is determined by analyzing a preceding first and/or second target phrase of the user of the first device or of a user of the second device, and/or by analyzing a mood of the user of the first device and/or a profile describing personal preferences of the user of the first device and/or of the second device.

**6.** The method of any of claims 3 to 5, wherein a content is rendered at the first and/or second device, the content corresponding to the semantic context.

**7.** The method of any of the preceding claims, wherein the translator is a member of a social community.

**8.** The method of any of the preceding claims, wherein
the database further comprises third template phrases of a third language, a respective third template phrase being a translation of a respective first template phrase the respective third template phrase is associated with, the translation having been verified by a further translator, and wherein
a third target phrase being a translation of the first target phrase is determined and output at a third device, the third target phrase corresponding to a certain third template phrase associated with the certain first template phrase in the database.

**9.** The method of any of the preceding claims,
wherein, if no certain first template phrase matching or being related to the input is found in the database, the second target phrase is determined by translating the input, and
wherein a further first template phrase and a further second template phrase are included in the database and associated with each other, the further first template phrase corresponding to the input for which no certain first template was found and the further second template phrase corresponding to the determined second target phrase.

**10.** The method of claim 9, wherein the input, the second target phrase, the further first template phrase and/or the further second template phrase is approved by a human.

**11.** The method of any of the preceding claims,
wherein a style of communication is determined by analyzing at least one of a group including the input, a preceding first and second target phrase of the user of the first device, a preceding first and second target phrase of the user of the second device, a semantic context of the input, a user profile of the user of the first device, an age of the user of the first device, a user profile of a user of the second device, and an age of the user of the second device, and
wherein the first target phrase, the second target phrase and/or the set of target phrases is determined depending on the style of communication by analyzing identifiers descriptive of the style of communication included in the database.

**12.** The method of any of the preceding claims, wherein
the input is a speech utterance of the user of the first device, and/or wherein
the second target phrase is outputted as an audio output at the second device, the audio output being determined by a text-to-speech conversion or by prerecorded audio data stored in the database in relation with the second template phrases.

**13.** A system for inter-lingual electronic communication, including
a database which comprises first template phrases of a first language associated with second template phrases of a second language, wherein a respective second template phrase is a translation of a respective first template phrase the respective second template phrase is associated with, the translation having been verified by a translator;
a first device having means for receiving an input;
means for determining a first target phrase by comparing the input to at least a part of the first template phrases in the database, the first target phrase corresponding to a certain first template phrase of the database at least partly matching or being related to the input;
means for determining a second target phrase being a translation of the first target phrase, the second target phrase corresponding to a certain second template phrase associated with the certain first template phrase in the database; and
a second device having means for outputting the second target phrase.

**14.** A server for inter-lingual electronic communication, including
a storage adapted to store a database in which first template phrases of a first language are associated with second template phrases of a second language, wherein a respective second template phrase is a translation of a respective first template phrase the respective second template phrase is associated with, the translation having been verified by a translator;
a communication unit adapted to receive an input of a first device and to send an output to a second device;
a data processor adapted to determine a first target phrase by comparing the input to at least a part of the first template phrases in the database, the first target phrase corresponding to a certain first template phrase of the database at least partly matching or being related to the input, further adapted to determine a second target phrase being a translation of the first target phrase, the second target phrase corresponding to a certain second template phrase associated with the certain first template phrase in the database, and further adapted to determine the output corresponding to the second target phrase.

**15.** A device for inter-lingual electronic communication, including a database access unit;
a user interface;
a data processor; and
a communication unit;
wherein the database access unit is adapted to access a data base, which database comprises first template phrases of a first language associated with second template phrases of a second language, wherein a respective second template phrase is a translation of a respective first template phrase the respective second template phrase is associated with, the translation having been verified by a translator,
wherein the user interface is adapted to receive an input from a user, wherein the data processor is adapted to determine a first target phrase by comparing the input to at least a part of the first template phrases in the database, the first target phrase corresponding to a certain first template phrase of the database at least partly matching the input, and further adapted to determine a second target phrase being a translation of the first target phrase, the second target phrase corresponding to a certain second template phrase associated with the certain first template phrase in the database, and
wherein the communication unit is adapted to transmit the first target phrase and/or the second target phrase over a network and further adapted to receive over the network a further second target phrase to be output by the user interface to the user.
